(19) **Europäisches Patentamt**

**European Patent Office**

**Office européen des brevets**

(11) Publication number: **0 474 391 B1**

(12) **EUROPEAN PATENT SPECIFICATION**

(45) Date of publication of patent specification: **25.10.95**

(51) Int. Cl.[6]: **C08F 10/00**, C08F 4/642

(21) Application number: **91307633.7**

(22) Date of filing: **19.08.91**

(54) **Polyolefins.**

(30) Priority: **21.08.90 JP 219769/90**
**29.08.90 JP 226955/90**

(43) Date of publication of application:
**11.03.92 Bulletin 92/11**

(45) Publication of the grant of the patent:
**25.10.95 Bulletin 95/43**

(84) Designated Contracting States:
**DE GB**

(56) References cited:
**EP-A- 0 185 918**
**EP-A- 0 302 424**
**WO-A-87/03889**

(73) Proprietor: **NIPPON OIL CO. LTD.**
**3-12, Nishi-Shimbashi 1-chome**
**Minato-ku**
**Tokyo (JP)**

(72) Inventor: **Tajima, Yoshio**
**8 Chidori-cho,**
**Naka-ku**
**Yokohama-shi,**
**Kanagawa-ken (JP)**
Inventor: **Nomiyama, Kazutoshi**
**8 Chidori-cho,**

**Naka-ku**
**Yokohama-shi,**
**Kanagawa-ken (JP)**
Inventor: **Kataoka, Naoki**
**8 Chidori-cho,**
**Naka-ku**
**Yokohama-shi,**
**Kanagawa-ken (JP)**
Inventor: **Matsuura, Kazuo**
**8 Chidori-cho,**
**Naka-ku**
**Yokohama-shi,**
**Kanagawa-ken (JP)**

(74) Representative: **Bridge-Butler, Alan James et al**
**G.F. Redfern & Co.**
**Redfern House**
**149/151 Tarring Road**
**Worthing,**
**West Sussex BN11 4HE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to olefinic homopolymers or copolymers having unique physical characteristics. More particularly, the invention relates to a process for the production of such polyolefins using a selected mode of polymerization and a specified catalyst therefor.

A certain catalyst has recently been reputed as particularly suitable for use in homopolymerizing ethylene and also in copolymerizing ethylene with other different $\alpha$-olefins. It is made up of a metallocene-based component and a methylalmoxane compound as disclosed for instance in Japanese Patent Laid-Open Publication No. 58-19309. The catalyst of this character is rather high in activity per transition metal and capable of producing ethylene homopolymers of narrower molecular weight distributions and ethylene-$\alpha$-olefin copolymers of narrower composition distributions and lesser stickinesses on the surfaces of the ultimate moldings.

The foregoing catalyst, however, has a drawback in that in gas phase polymerization it will in most cases form objectionable polymer blocks as depsits on the wall or stirrer in a reactor. This literally poses an obstacle to continuous polymerization. In Japanese Patent Laid-Open Publication Nos. 61-296008 and 61-108610 it has been proposed, in an effort to solve the above problem, to support the catalyst component on an inorganic oxide carrier but with insufficient catalytic activity. Japanese Patent Laid-Open Publication Nos. 63-51407 and 1-101315 each teach the use of an activating compound as a cocatalyst so as to improve catalytic activity.

Though acceptably high in activity in terms of transition metals, the above catalysts of the prior art are not wholly satisfactory as the resulting polymer is susceptible to small bulk density and inadequate particle shape. Both great bulk density and good particle shape are important determinants of possible continuous runs of polymerization particularly under solvent-free, gas-phase conditions. There is a strong demand for production methods of polyolefins of the above desired qualities.

The present invention seeks to provide a new process for producing polyolefins in the presence of a specific catalyst which enables polymerization reaction in continuous fashion and with high catalytic activity even in gas phase polymerization.

Olefin homopolymers according to the invention are great in bulk density and optimum in particle shape. Ethylene-$\alpha$-olefin copolymers in particular have, in addition to the aforesaid physical properties, narrowed molecular weight distribution, increased die swell ratio and reduced surface stickiness. Also noticeably, similar copolymers are available with superior heat resistance and heat sealability qualities in the case of use of titanium as a catalyst component metal. The last-mentioned copolymers have a bimodal peak of melting points at high and low temperature sides as determined by differential scanning calorimetry.

Many other objects and advantages of the invention will become apparent from the following description.

More specifically, the invention provides a process for producing polyolefins which comprises homopolymerizing an olefin or copolymerizing two or more different olefins in the presence of a catalyst comprising a solid catalyst component and a modified organoaluminum compound, the solid catalyst component derived by mutually contacting (a) an inorganic porous oxide, (b) a compound of the formula $Al(OR^1)_nX_{3-n}$ where $R^1$ is a hydrocarbon group of 1 to 24 carbon atoms, X is a halogen atom, and n is $0 < n \leq 3$, and (c) a compound of the formula $R_p^2 MX_r$ where M is a Group IVa metal, $R^2$ is a cyclopentadienyl, substituted cyclopentadienyl, indenyl or substituted indenyl group or an aralkyl group of 7 to 24 carbon atoms, either two groups of $R^2$ may be bonded via an alkylene group of 2 to 8 carbon atoms, X is a halogen or hydrogen atom or a hydrocarbon moiety of 1 to 24 carbon atoms, and p and r are $2 \leq p \leq 4$, $0 \leq r \leq 2$, and $p + r = 4$, the modified organoaluminum resulting from reaction of an organoaluminum compound and water and having in the molecule one or more Al-O-Al bonds.

The invention further provides a process for producing polyolefins which comprises homopolymerizing an olefin or copolymerizing two or more olefins in the presence of a catalyst comprising a solid catalyst component and a modified organoaluminum compound, the solid catalyst component derived from mutual contact of (a) an inorganic porous oxide, (b) a compound of the formula $Al(OR^1)_nX_{3-n}$ where $R^1$ is a hydrocarbon group of 1 to 24 carbon atoms, X is a halogen atom, and n is $0 < n \leq 3$, and (c) a compound of the formula $R_p^2 MX_r$ where M is a Group IVa metal, $R^2$ is a cyclopentadienyl, substituted cyclopentadienyl, indenyl or substituted indenyl group or an aralkyl group of 7 to 24 carbon atoms, either two groups of $R^2$ may be bonded via an alkylene group of 2 to 8 carbon atoms, X is a halogen or hydrogen atom or a hydrocarbon residue of 1 to 24 carbon atoms, and p and r are $2 \leq p \leq 4$, $0 \leq r \leq 2$ and $p + r = 4$, and (d) a magnesium halide, the modified organoaluminum compound resulting from reaction of an organoaluminum compound and water and having in the molecule one or more Al-O-Al bonds.

The catalyst according to the present invention is comprised of a solid catalyst component of a specified composition and a modified organoaluminum compound of a specified structure.

The solid catalyst component used herein may be derived by mutual contact of three members, i.e. (a) an inorganic porous oxide, (b) an $Al(OR^1)_nX_{3-n}$ compound and (c) an $R^2_pMX_r$ compound.

Compound (a) as a porous oxide has a surface area of 50 to 1,000 m²/g, preferably 100 to 500 m²/g, more preferably 150 to 350 m²/g, and a pore volume of 0.5 to 3.0 cm³/g, preferably 1.0 to 2.5 cm³/g, more preferably 1.5 to 2.5 cm³/g. This compound may be chosen from silica, alumina, silica-alumina, titania, zirconia and thoria either alone or in combination. Silica and alumina are particularly preferred. Any given oxide commercially obtained can be used as it is, or may be conveniently pretreated with heat in an inert gas or dried for example at from 150 to 800°C, preferably 200 to 600°C, and for 0.5 to 10 hours, preferably 2 to 5 hours.

Compound (b) is a compound of the formula $Al(OR^1)_nX_{3-n}$ where $R^1$ is a hydrocarbon group of a carbon number of 1 to 24, preferably 1 to 12, such as an alkyl, aryl or aralkyl group, X is a halogen atom, and n is $0 < n \leq 3$. Specific examples of compound (b) include trimethoxyaluminum, dimethoxymonochloroaluminum, methoxydichloroaluminum, triethoxyaluminum, diethoxymonochloroaluminum, ethoxydichloroaluminum, triisopropoxyaluminum, diisopropoxymonochloroaluminum, isoproxydichloroaluminum, tri-n-butoxyaluminum, di-n-butoxymonochloroaluminum, n-butoxydichloroaluminum, tri-sec-butoxyaluminum, di-sec-butoxymonochloroaluminum, sec-butoxydichloroaluminum, tripentoxyaluminum, dipentoxymonochloroaluminum, pentoxydichloroaluminum, triphenoxyaluminum, diphenoxymonochloroaluminum, monophenoxydichloroaluminum, tritolyloxyaluminum, ditolyloxymonochloroaluminum, tolyloxydichloroaluminum, and tribenzyloxyaluminum. Particularly preferred are triethoxyaluminum, triisopropoxyaluminum and tri-n-butoxyaluminum.

Compound (c) is such of the formula $R^2_pMX_r$ where M is a Group IVa transition metal, $R^2$ is a cyclopentadienyl, substituted cyclopentadienyl, indenyl or substituted indenyl group or an aralkyl group of a carbon number of 7 to 24, preferably 7 to 13, either two groups of $R^2$ may be bonded via an alkylene group of a carbon number of 2 to 8, preferably 2 to 4, X is a chlorine, bromine or fluorine atom, a hydrogen atom or a hydrocarbon moiety of a carbon number of 1 to 24, preferably 1 to 12, and p and r are $2 \leq p \leq 4$, $0 \leq r \leq 2$, and $p + r = 4$.

Suitable substituents for use in the substituted cyclopentadienyl and substituted indenyl groups of $R^2$ may be selected from an alkyl group of 1 to 6 carbon atoms, such as a methyl, ethyl or propyl group, and a hydrogen atom. Aralkyl groups of $R^2$ include a benzyl, phenethyl, benzhydryl, trityl, phenethybutyl and phenethylpropyl groups. In the case where an alkylene group is present in compound (c), $R^2$ is either two of cyclopentadienyl, substituted cyclopentadienyl, indenyl and substituted indenyl groups. Hydrocarbon moeities as X include an alkyl group such as methyl, ethyl, propyl or the like, an aryl group such as phenyl, or tolyl, an aralkyl group such as benzyl, phenethyl, benzhydryl, trityl, phenylbutyl, or phenylpropyl, an ethoxy group, a propoxy group, a phenoxy group, and an aryloxy group. When r in the $R^2_pMX_r$ formula is equal to 2, X is the same or different.

Specific examples of compound (c) include
bis(cyclopentadienyl)dichlorotitanium,
bis(cyclopentadienyl)methylchlorotitanium,
bis(cyclopentadienyl)dimethyltitanium,
bis(cyclopentadienyl)ethoxychlorotitanium,
bis(cyclopentadienyl)propoxychlorotitanium,
bis(cyclopentadienyl)phenoxychlorotitanium,
bis(cyclopentadienyl)propylchlorotitanium,
bis(cyclopentadienyl)diphenyltitanium,
bis(cyclopentadienyl)ditolyltitanium,
bis(cyclopentadienyl)titaniumbenzyl,
bis(cyclopentadienyl)titanium monochloromonohalide,
bis(methylcyclopentadienyl)dimethyltitanium,
tetracyclopentadienyltitanium,
bis(indenyl)dichlorotitanium,
bis(indenyl)dimethyltitanium,
ethylene bis(indenyl)titanium dichloride,
ethylene bis(tetrahydroindenyl)titanium dichloride,
tetraneopentyltitanium, tetraneophenyltitanium,
tetrabenzyltitanium,
bis(cyclopentadienyl)-dichlorozirconium,

EP 0 474 391 B1

bis(cyclopentadienyl)methylchlorozirocnium,
bis(cyclopentadienyl)dimethylzirconium,
bis(indenyl)dimethylzirconium,
bis(indenyl)dichlorozirconium,
ethylene bis(indenyl)dimethylzirconium,
ethylene bis(indenyl)dichlorozirconium,
ethylene bis(tetrahydroindenyl)dichlorozirconium,
bis(methylcyclopentadienyl)dimethylzirconium,
bis(cyclopentadienyl)zirconium monochloromonohalide,
bis(cyclopentadienyl)zirconiumbenzyl,
tetracyclopentadienylzirconium, tetrabenzylzirconium,
bis(cyclopentadienyl)ethoxychlorozirconium,
bis(cyclopentadienyl)propoxychlorozirconium,
bis(cyclopentadienyl)phenoxychlorozirconium,
bis(cyclopentadienyl)propylchlorozirconium,
bis(cyclopentadienyl)diphenylzirconium,
bis(cyclopentadienyl)citrylzirconium,
bis(cyclopentadienyl)monomethylmonohalide zirconium,
bis(cyclopentadienyl)monoethylmonochloride zirconium,
bis(cyclopentadienyl)monophenylmonochloride zirconium,
tetraneopentylzirconium, tetraneophenylzirconium,
bis(cyclopentadienyl)dimethylhalfnium,
bis(cyclopentadienyl)dichlorohalfnium,
bis(cyclopentadienyl)methylchlorohalfnium,
bis(cyclopentadienyl)ethylchlorohalfnium,
bis(cyclopentadienyl)propylchlorohalfnium,
bis(cyclopentadienyl)phenylchlorohalfnium,
bis(cyclopentadienyl)diphenylhalfnium,
bis(cyclopentadienyl)ditolylhalfnium,
bis(cyclopentadienyl)monochlorohalide halfnium,
bis(cyclopentadienyl)monomethylhalide halfnium,
bis(cyclopentadienyl)dibenzylhalfnium,
ethylene bis(indenyl)dichlorohalfnium,
ethylene bis(tetrahydroindenyl)dichlorohalfnium,
tetraneopentylhalfnium, and tetraneophenylhalfnium. These compounds may be used singly or put together. Preferred from among the listed compounds are bis(cyclopentadienyl)dichlorotitanium, bis(cyclorodienyl)-dimethyltitanium, bis(cycloropentadienyl)dichlorohalfnium, bis(cyclopentadienyl)dimethylhalfnium, ethylene bis(indenyl)dichlorozirconium and ethylene bis(indenyl)dimethylzirconium.

The solid catalyst component contemplated under the invention are obtained by bringing compounds (a), (b) and (c) into contact with one another. Either one of the following sequences of contact is suitable for the formation of the catalyst component.

(1) simultaneous contact of compounds (a), (b) and (c)
(2) contact of compounds (a) and (b), followed by compound (c)
(3) contact of compounds (a) and (c), followed by compound (b)

The contact of compounds (a) to (c) may be effected, though not restricted, at from 0 to 200°C, preferably 50 to 100°C, and for 5 minutes to 30 hours, preferably 30 minutes to 10 hours, in the presence of an organic solvent typically chosen from inert hydrocarbons such as heptane, hexane, pentane, nonane, benzene, toluene and the like, alcohols, phenols, ethers, ketones, esters, amines, nitriles and halogen-containing compounds such as 1,2-dichloroethane, tetrachloroethane, ethylidene chloride, carbon tetrachloride, chloroform, chlorobenzedne, dichlorobenzene and polar solvents, either alone or in combination. After completion of the contact, the solvent may be removed as by evaporation.

More convenient is sequence (2) among the above sequences of contact. To conduct sequence (2), compounds (a) and (b) may be contacted by impregnating into compound (a) a solution of compound (b) previously dissolved in either one of the above listed solvents, or by dissolving both compounds together in the solvent. Contact conditions may be set at from 0 to 200°C, preferably 20 to 100°C, and for 5 minutes to 30 hours, preferably 30 minutes to 20 hours. The concentration of compound (b) ranges from 0.1 to 5 mol per liter of solvent, preferably 0.5 to 1.5 mol, and the amount of compound (b) is in the range 0.01 to 5 mmol per gram of compound (a), preferably 0.1 to 1.5 mmol. While in contacting compound (b) would

4

presumably partially react with compound (a).

Compound (a) in which compound (b) has been contained in a predetermined proportion may be suitably washed with a similar solvent and then brought into contact with compound (c). In such instance compound (a) may be previously dried or may be employed as prepared in dispersion form. Compound (a) thus treated may be contacted with compound (c) with stirring in either one of the above listed solvents for example at from 20 to 200°C, preferably 50 to 100°C, and for 5 minutes to 30 hours, preferably 30 minutes to 10 hours, followed by removal of the solvent. The content of compound (c) in the resulting catalyst component is in the range of 0.1 to 10% by weight in terms of a transition metal, preferably 0.5 to 8.0% by weight.

Advantageously, by varying the content of compound (b) of the $Al(OR^1)_n X_{3-n}$ formula, polymers to be formed can be adjusted, at will, in their melting points which are associated with polymer processing.

The modified organoaluminum compound according to the invention results from reaction of an organoaluminum compound with water, and it has in the molecule an Al-O-Al bond within the number of 1 to 100, preferably 1 to 50. Reaction may be made usually in an inert hydrocarbon chosen from an aliphatic hydrocarbon such as pentane, hexane, heptane, an alicyclic hydrocarbon such as cyclohexane, or an aromatic hydrocarbon such as benzene, toluene, or xylene, among which aliphatic and aromatic hydrocarbons are particularly preferred.

Suitable organoaluminum compounds are those of the formula $R_n^3 AlX_{3-n}$ where $R^3$ is a hydrocarbon group such as an aralkyl group of a carbon number of 1 to 18, preferably 1 to 12, or an alkenyl, aryl or aralkyl group, X is a halogen or hydrogen atom, and n is $1 \leq n \leq 3$. Trialkylaluminums are typical in which the alkyl group is a methyl, ethyl, propyl, isopropyl, butyl, isobutyl, pentyl, hexyl, octyl, decyl or dodecyl group. Methyl among these groups is more suitable.

The molar ratio of water to organoaluminum compound may be in the range of 0.25:1 to 1.2:1, preferably 0.5:1 to 1:1. Reaction conditions may be at from -70 to +100°C, preferably -20 to +20°C, and for 5 to 48 hours, preferably 10 to 24 hours. Coreactive water may be one attached as the water of crystallization to copper sulfate hydrate, aluminum sulfate hydrate or the like.

A modified form of catalyst according to the invention is comprised of a solid catalyst component in which a magnesium halide is further incorporated as compound (d). Various other constituting compounds are as specified in connection with the first-mentioned form of catalyst.

Compound (d) is magnesium fluoride, magnesium chloride, magnesium bromide or magnesium iodide, each being substantially anhydrous, either alone or in combination. This compound may be treated with an electron donor such as an alcohol, ester, ketone, carboxylic acid, ether, amine, or phosphine.

To prepare the solid catalyst component for use in the modified catalyst, compound (a) to (d) are mutually contacted by the sequences of contact given below.

(4) simultaneous contact of compounds (a), (b), (c) and (d)

(5) contact of compound (a) with compound (d), (b) and (c) in the order mentioned

(6) contact of compounds (a) and (b), followed by compounds (d) and (c)

(7) contact of compounds (d) and (b), followed by compounds (a) and (c)

(8) contact of compounds (b) and (c), followed by compounds (d) and (a)

(9) contact of compounds (d), (b) and (c), followed by compound (a)

Sequence (7) is particularly preferred. Contacting may be done with stirring in an organic solvent at from 20 to 200°C, preferably 50 to 100°C, and for 5 minutes to 30 hours, preferably 30 minutes to 10 hours, after which the solvent is removed. The solvent may be suitably selected from those specified with regard to sequences (1) to (3). Alternatively, copulverization is feasible by ball milling, vibration milling, rod milling or impact milling with or without use of solvent and at from -20 to +200°C, preferably 50 to 100°C, and for 10 minutes to 50 hours, preferably 30 minutes to 30 hours.

Solvent contact is preferred to contact compounds (a) and (b), or compounds (b) and (c) in the presence of a solvent such as an inert hydrocarbon, halogen-containing compound or polar solvent as listed above. Copulverization contact is convenient in contacting compounds (d) and (b), or compounds (d), (b) and (c).

Compound (d) ranges in amount from 0.1 to 5 mmol per gram of compound (a), preferably 0.5 to 2 mmol, and compound (b) from 0.1 to 2 mmol per gram of compound (a), preferably 0.15 to 1.5 mmol. The content of compound (c) in the resultant catalyst component is between 0.5 and 10% by weight in terms of a transition metal, preferably between 0.1 and 8.0% by weight.

The process according to the invention is designed to homopolymerize or copolymerize olefins in the presence of the above specified catalyst. Into the reaction system a given solid catalyst component and a given modified organoaluminum compound may be put independently or as previously admixed. The catalyst component is used in an amount of 1 to 1,000,000, preferably 5 to 1,000, in an atomic ratio of transition metal to aluminum.

The process of the invention is applicable to all the olefins polymerizable with use of Ziegler type catalysts. It is suitable particularly for use in the homopolymerization of $\alpha$-olefins of a carbon number of 2 to 12 such as ethylene, propylene, butene-1, hexene-1, or 4-methylpentene-1 and also in the copolymerization of ethylene with an $\alpha$-olefins other than ethylene. $\alpha$-Olefins as comonomers have a carbon number of 3 to 12, preferably 3 to 6, and include propylene, butene-1, hexene-1, and 4-methylpentene-1. Propylene-butene-1 and ethylene-two or more $\alpha$-olefins are also copolymerizable.

To further improve the end polymer from the physical point of view, the olefin may be copolymerized with a diene compound such as butadiene, 1,4-hexadiene, ethylidene norboronene, or dicyclopentadiene.

The amount of the comonomer used is not specifically restricted but may be set usually at not more than 40% by mol, preferably less than 30% by mol, more preferably below 20% by mol.

The process of the invention is implemented by slurry, solution and gas phase polymerizations. Particularly preferred is gas phase polymerization usually conducted under oxygen-free, moisture-free conditions and with or without addition of an inert hydrocarbon. In the absence of the hydrocarbon, it is convenient to employ a gas phase method of a fluidized bed type in which reaction is made while polymers having been formed are maintained in a fluidized state, or a gas phase method of a stirring type. Continuous- or batch-type operation is possible. Reaction temperatures may be at from 20 to 200°C, preferably 50 to 100°C, reaction pressures at from atmospheric to 70 kg/cm$^2$G, preferably atmospheric to 20 kg/cm$^2$G, and reaction times at from 5 minutes to 10 hours, preferably 10 minutes to 5 hours.

The molecular weight of a homopolymer or copolymer to be formed may be adjusted by feeding a predetermined amount of hydrogen into the reaction system. Hydrogen feeding is more efficient than controlling the reaction temperatures and catalyst proportions.

According to the process of the invention, polymerization can be done with two or more stages of varied hydrogen concentrations, reaction temperatures and other parameters.

The invention will be further described by way of the following examples which should be regarded as illustrative but not as restrictive.

As shown in Tables 1 and 2, different catalysts were prepared and used to produce test ethylene-$\alpha$-olefin copolymers. All the polymers were checked for a set of physical characteristics under the conditions given below and with the results listed in Tables 3 and 4 along with the respective catalytic activities in terms of gram polymer per gram transition metal.

Melt Index (MI)

ASTM D1238-57T was followed at two varied loads at 190°C, 2.16 kg (MI$^{2.16}$) and 10 kg (MI$^{10}$).

Die Swell Ratio (DSR)

MI tester was used with the following equation.

$$R = \frac{A}{B}$$

R : die swell ratio
A : outside diameter of strand in MI measurement
B : inside diameter of orifice (2.1 mm)

Density (D)

Measurement was made by the ASTM D1505-68 procedure.

Melting Point (MP) by Differential Scanning Calorimetry (DSC)

On Seiko Electronics' DSC-20 tester a 5-mg portion of the test polymer was left at 180°C for 3 minutes, cooled at 0°C with a temperature drop of 10°C/min and allowed to stand at 0°C for 10 minutes, followed by heating with a temperature rise of 10°C/min.

Preparation of Methylalmoxane as Modified Organoaluminum Compound

In a 300-ml three-necked flask equipped with an electromagnetic stirrer were placed 13 g of copper sulfate, $CuSO_4 \cdot 5H_2O$, and 50 ml of toluene. The mixture after being suspended was incorporated dropwise at 0°C and over 2 hours with 150 ml of a 1 mmol/ml trimethylaluminum solution. Reaction was effected at 25°C for 24 hours. Filtration of the reaction mixture and subsequent evaporation of excess toluene gave 4 g of the title compound in white crystalline form.

Preparation of Tetrabenzylzirconium as $R_p^2 MX_r$ Compound

Into a 1-liter three-necked flask equipped with an electromagnetic stirrer were taken at 0°C and in a nitrogen atmosphere 500 ml of a diethyl ether solution in which 70 g of benzylmagnesium chloride was dissolved. 30 g of zirconium tetrachloride was thereafter added over 30 minutes at the same temperature and in the same atmosphere. The mixture was stirred for 2 hours while the temperature was being elevated to room temperature. After addition of 300 ml of decalin, stirring was continued at room temperature for one hour. Magnesium chloride having been formed was separated, and the resultant decal in solution was heated at 50°C to remove ether by nitrogen blowing. There was obtained 32 g of the title compound.

Preparation of Catalyst Component A

In a 300-ml three-necked flask equipped with an electromagnetic stirrer was placed 20 g of silica, $SiO_2$, (Grade No. 952, Fuji-Davison Co.), the silica having been calcined at 460°C. A solution of triisopropoxyaluminum, $Al(OiPr)_3$, was added at room temperature, which solution was prepared by dissolving 2 g of Al-$(OiPr)_3$ in 100 ml of n-hexane. The mixture was stirred in a nitrogen atmosphere and at 50°C for 2 hours, followed by separation of the supernatant, by washing with 100 ml of n-hexane and by drying through nitrogen blowing. The residue was incorporated with a solution of bis(cyclopentadienyl)dichlorotitanium, $Cp_2TiCl_2$, in a nitrogen atmosphere and at room temperature, which solution was prepared by dissolving 1.2 g of $Cp_2TiCl_2$ in 70 ml of 1,2-dichloroethane. Subsequent stirring was done at room temperature for 2 hours after which the solvent was removed by nitrogen blowing at 50°C. The resultant catalyst component showed a titanium content of 1.03% by weight.

Preparation of Catalyst Component B

The procedure of catalyst component A was followed except that $Al(OiPr)_3$ was varied in amount from 2.0 g to 4.0 g. The resulting solid component was in a titanium content of 0.95% by weight.

Preparation of Catalyst Component C

The procedure of catalyst component A was followed except that 0.73 g of bis(cyclopentadienyl)-dichlorozirconium, $Cp_2ZrCl_2$, was used in place of $Cp_2TiCl_2$ and dissolved in 100 ml of toluene. The resulting solid component had a zirconium content of 0.99% by weight.

Preparation of Catalyst Component D

The procedure of catalyst component C was followed except for the use of $Cp_2Zr(CH_3)_2$ in an amount of 0.8 g. The resulting solid component had a zirconium content of 1.0% by weight.

Preparation of Catalyst Component E

The procedure of catalyst component A was followed except that 2.5 g of tri-sec-butoxyaluminum, Al-$(OsecBu)_3$, was used in place of $Al(OiPr)_3$ and that the amount of $Cp_2TiCl_2$ was changed from 1.2 g to 2.6 g. The resulting solid component was 2.0% by weight in titanium content.

Preparation of Catalyst Component F

The procedure of catalyst component A was followed except that $SiO_2$ calcined at 600°C was used and that 1 g of bis(cyclopentadienyl)dimethyltitanium, $Cp_2TiMe_2$, in 100 ml of toluene was substituted for $Cp_2TiCl_2$. A solid component was obtained with a titanium content of 1.03 % by weight.

EP 0 474 391 B1

Preparation of Catalyst Component G

The procedure of catalyst component F was followed except that 0.65 g of bis(cyclopentadienyl)-dimethylzirconium, $Cp_2ZrMe_2$, was used in place of $Cp_2TiMe_2$. There was provided a solid component of 1.0% by weight in zirconium content.

Preparation of Catalyst Component H

The procedure of catalyst component A was followed except for the use of 1.8 g of diisopropox-yaluminum chloride, $Al(OiPr)_2Cl$, in place of $Al(OiPr)_3$ with the result that a solid component was given with a titanium content of 1.05% by weight.

Preparation of Catalyst Component I

The procedure of catalyst component A was followed except that 1.2 g of tetrabenzylzirconium, $(Bz)_4Zr$, was used in place of $Cp_2TiCl_2$ and dissolved in a mixture of 50 ml of toluene and 50 ml of decalin. There was obtained a solid component with a zirconium content of 0.98% by weight.

Preparation of Catalyst Component J

The procedure of catalyst component A was followed except for the use of 0.5 g of bis-(dicyclopentadienyl)dichlorohalfnium, $Cp_2HfCl_2$. The resulting solid component was 0.99% by weight in halfnium content.

Preparation of Catalyst Component K

The procedure of catalyst component A was followed except for the use of 1.75 g of bis(indenyl)-dichlorotitanium, $(Ind)_2TiCl_2$, so that a solid component was obtained with a titanium content of 1% by weight.

Preparation of Catalyst Component L

In a 400-ml stainless steel pot, provided therein with 25 stainless steel balls of 1/2 inch in diameter, were placed 10 g of $Al(OiPr)_3$ and 0.55 g of $Cp_2TiCl_2$. Ball milling was effected in a nitrogen atmosphere and at room temperature for 16 hours, thereby giving a solid component of 1.0% by weight in titanium content.

Preparation of Catalyst Component M

In a 300-ml three-necked flask equipped with an electromagnetic stirrer was placed 20 g of Grade No. 952 $SiO_2$ calcined at 460°C. 1.1 g of $Cp_2TiCl_2$ in 70 ml of 1,2-dichloroethane was thereafter added in a nitrogen atmosphere and at room temperature. Stirring was done at room temperature for 2 hours, followed by removal of the solvent by nitrogen blowing at 50°C. The resulting solid component had a titanium content of 1.0% by weight.

Catalyst components A to K were inventive and catalyst components L and M comparative.

Inventive Example 1

In a 3-liter stainless steel autoclave which had been replaced with nitrogen were 20 g of polyethylene pellet seed, 100 mg of catalyst component A and 3.9 ml of methylalmoxane, MAO, in a 2.7 mmol/ml solution. The mixture was stirred at 60°C, followed by charge of a combined gas of ethylene and butene-1 at 9 kg/cm²G (1 kg/cm² = 0.98 bar). The mol ratio of butene-1 to ethylene was 0.25. Polymerization was conducted for 2 hours with continuous feeding of the gas in a mol ratio of butene-1 to ethylene of 0.05 and at a total pressure of 9 kg/cm²G. After completion of the reaction, the system was purged of excess gas and then cooled to remove the seed, thereby providing 43 g of a white polymer.

8

Inventive Examples 2 to 11

The method of Inventive Example 1 was followed except for the use of catalyst components B to K, respectively.

Comparative Example 1

The method of Inventive Example 1 was followed except that 10 mg of $Cp_2TiCl_2$ was used in place of catalyst component A with MAO varied in amount from 3.9 ml to 7.4 ml.

Comparative Examples 2 and 3

The method of Inventive Example 1 was followed except for the use of catalyst components L and M, respectively.

Comparative Example 4

The method of Comparative Example 1 was followed except that the amount of MAO was varied at 6.3 ml.

Preparation of Catalyst Component AA

(1) Copulverization of $MgCl_2$ with $Al(OC_2H_5)_3$

Into a 400-ml stainless steel pot in which were contained 25 stainless steel balls of 1/2 inch in diameter were taken 10 g of magnesium chloride anhydride, $MgCl_2$, and 3.83 g of triethoxyaluminum, $Al(OC_2H_5)_3$. Ball milling was effected in a nitrogen atmosphere and at room temperature for 16 hours, followed by dissolution of 2.63 g of the resulting copulverizate in 80 ml of anhydrous tetrahydrofuran.

(2) Deposition on $SiO_2$

In a 300-ml three-necked flask equipped with an electromagnetic stirrer were placed in a nitrogen atmosphere and at room temperature 10 g of Grade No. 952 $SiO_2$ calcined at 460°C and 80 ml of the tetrahydrofuran solution prepared above. After being stirred at room temperature for 2 hours, the mixture was reacted with refluxing for 3 hours. On separation of the supernatant the solvent was removed by nitrogen blowing. To the residue was added in a nitrogen atmosphere and at room temperature 0.7 g of $Cp_2TiCl_2$ dissolved in 70 ml of 1,2-dichloroethane. Stirring was continued at room temperature for 2 hours after which the solvent was nitrogen-blown at 50°C. The resulting solid component had titanium contained in an amount of 1.02% by weight.

Preparation of Catalyst Component BB

(1) Copulverization of $MgCl_2$ with $Al(OC_2H_5)_3$

The procedure of catalyst component AA was followed except that $Al(OC_2H_5)_3$ was varied in amount from 3.83 g to 8.5 g. 5.3 g of the resultant copulverizate was dissolved in 160 ml of anhydrous tetrahydrofuran.

(2) Deposition on $SiO_2$

The procedure of catalyst component AA was followed except for the use of 160 ml of tetrahydrofuran and of 0.83 g of $Cp_2TiCl_2$. A solid component was obtained with a titanium content of 0.98% by weight.

Preparation of Catalyst Component CC

(1) Copulverization of $MgCl_2$ with $Al(OC_2H_5)_3$

The procedure of catalyst component AA was followed except that the amount of $Al(OC_2H_5)_3$ was changed to 4.9 g. 1.42 g of the copulverizate thus formed was dissolved in 50 ml of anhydrous tetrahydrofuran.

(2) Deposition on $SiO_2$

The procedure of catalyst component AA was followed except that tetrahydrofuran and $Cp_2TiCl_2$ were varied in amount at 50 ml and at 0.62 g, respectively. The resulting solid catalyst was 1.03% by weight in titanium content.

Preparation of Catalyst Component DD

The procedure of catalyst component AA was followed except for the use of 0.42 g of $Cp_2ZrCl_2$ in place of $Cp_2TiCl_2$, whereby a solid component was prepared with a zirconium content of 1.0% by weight.

Preparation of Catalyst Component EE

(1) Copulverization of $MgCl_2$ with $Al(OiC_3H_7)_3$

The procedure of catalyst component AA was followed except that 4.8 g of $Al(OiC_3H_7)_3$ was substituted for $Al(OC_2H_5)_3$. 2.8 g of the resulting copulverizate was dissolved in 80 ml of anhydrous tetrahydrofuran.

(2) Deposition on $SiO_2$

The procedure of catalyst component AA was followed except that tetrahydrofuran was used in an amount of 80 ml. A solid component was provided with a titanium content of 0.99% by weight.

Preparation of Catalyst Component FF

In a 300-ml three-necked flask equipped with an electromagnetic stirrer were placed at room temperature 10 g of Grade No. 925 $SiO_2$ calcined at 460°C and 0.6 g of $Al(OiC_3H_7)_3$ dissolved in 100 ml of n-hexane. The mixture was stirred in a nitrogen atmosphere and at 50°C for 2 hours, followed by separation of the supernatant, by washing with 100 ml of n-hexane and by nitrogen blowing. The dry residue was incorporated with 0.95 g of $MgCl_2$ dissolved in 80 ml of anhydrous ethanol and thereafter stirred at room temperature for 2 hours. Nitrogen blowing was done at 50°C and in vacuo drying at 100°C for 2 hours. 0.63 g of $Cp_2TiCl_2$ dissolved in 70 ml of 1,2-dichloroethane was added in a nitrogen atmosphere and at room temperature. After stirring at room temperature, the solvent was nitrogen-blown at 50°C. The resulting solid component had a titanium content of 1.0% by weight.

Preparation of Catalyst Component GG

(1) Reaction of $Al(OiC_3H_7)_3$ with $Cp_2TiCl_2$

Into a 300-ml three-necked flask equipped with an electromagnetic stirrer were put 0.46 g of Al-$(OiC_3H_7)_3$ and 0.62 g of $Cp_2TiCl_2$ and then 100 ml of 1,2-dichloroethane. Reaction was made with refluxing for 2 hours.

(2) Deposition on $SiO_2$

In a similar flask were placed 10 g of Grade No. 952 $SiO_2$ calcined at 460°C and 0.95 g of $MgCl_2$ dissolved in 150 ml of ethanol. After 2-hour stirring at room temperature for 2 hours the mixture was nitrogen-blown at 50°C and then vacuum-dried. To the residue was added in a nitrogen atmosphere and at room temperature 100 ml of the reaction solution prepared above. Stirring was continued at room temperature for 2 hours, followed by nitrogen blowning at 50°C, so that a solid component was provided

10

EP 0 474 391 B1

with a titanium content of 0.98% by weight.

Preparation of Catalyst Component HH

(1) Copulverization of $MgCl_2$ with $Al(OiC_3H_7)_3$ and $Cp_2TiCl_2$

The procedure of catalyst component AA was followed except that $MgCl_2$ was varied in amount from 3.83 g to 4.75 g and that 3 g of $Al(OiPr)_3$ was substituted for $Al(OC_2H_5)_3$ with 3.15 g of $Cp_2TiCl_2$ further added. 2.18 g of the resultant copulverizate was suspended in 150 ml of anhydrous ethanol.

(2) Deposition on $SiO_2$

The procedure of catalyst component AA was followed except that tetrahydrofuran was replaced by ethanol, whereby a solid component was prepared with a titanium content of 1.0% by weight.

Preparation of Catalyst Components II, JJ, KK, LL and MM

The procedure of catalyst component AA was followed except that the compounds shown in Table 2 were used in place of $Cp_2TiCl_2$.

Preparation of Catalyst Components NN, OO and PP

The procedure of catalyst component AA was followed except the use of the compounds of Table 2 in place of $SiO_2$.

Preparation of Catalyst Component QQ

The procedure of catalyst component AA was followed except that $Al(OC_2H_5)_3$ was replaced by Al-$(OiC_3H_7)_2Cl$.

Preparation of Catalyst Component RR

Into a 300-ml three-necked flask equipped with an electromagnetic stirrer were taken in a nitrogen atmosphere and at room temperature 20 g of Grade No. 952 $SiO_2$ calcined at 460°C and 1.1 g of $Cp_2TiCl_2$ dissolved in 70 ml of 1,2-dichloroethane. After 2-hour stirring at room temperature the mixture was nitrogen-blown at 50°C to remove the solvent. A solid component was prepared with a titanium content of 1.0% by weight.

Preparation of Catalyst Component SS

In a similar flask were placed at room temperature 20 g of Grade No. 952 $SiO_2$ calcined at 460°C and 2.0 g of $Al(OiP_2)_3$ dissolved in 100 ml of n-hexane. Stirring was continued in a nitrogen atmosphere and at 50°C for 2 hours. On separation of the supernatant the reaction mixture was nitrogen-blown. To the dry residue was added in a nitrogen atmosphere and at room temperature 1.2 g of $(Ind)_2TiCl_2$ dissolved in 70 ml of 1,2-dichloroethane, followd by stirring at room temperature and by nitrogen blowing at 50°C to thereby remove the solvent. The resulting solid component had a titanium content of 1.0% by weight.

Catalyst components AA to QQ were inventive and catalyst components RR and SS comparative. These inventive components were of a four-member composition in the solid catalyst component.

Inventive Example 12

The method of Inventive Example 1 was followed except that catalyst component AA was used in place of catalyst component A of a three-membered solid component. A white polymer was produced in an amount Of 87 g.

11

Inventive Examples 13 to 18

The method of Inventive Example 12 was followed except for the use of catalyst components BB to QQ, respectively.

Comparative Exampless 5 and 6

The method of Inventive Example 12 was followed except for the use of catalyst components RR and SS, respectively.

Table 1

| run | solid catalyst component | | | | | | org Al compd | Al/M (mol ratio) |
|---|---|---|---|---|---|---|---|---|
| | type | (a) | (b) | Al/(c) (mmol/g) | (c) (wt%) | | | |
| IE 1 | A | SiO$_2$ | Al(OiPr)$_3$ | 0.5 | Cp$_2$TiCl$_2$ | 1.03 | MAO | 500 |
| 2 | B | " | " | 1 | " | 0.95 | " | " |
| 3 | C | " | " | 0.5 | Cp$_2$ZrCl$_2$ | 0.99 | " | " |
| 4 | D | " | " | 1 | " | 1.0 | " | " |
| 5 | E | " | Al(OsecBu)$_3$ | 0.5 | Cp$_2$TiCl$_2$ | 2.0 | " | " |
| 6 | F | " | Al(OiPr)$_3$ | " | Cp$_2$TiMe$_2$ | 1.03 | " | " |
| 7 | G | " | " | " | Cp$_2$ZrMe$_2$ | 1.0 | " | " |
| 8 | H | " | Al(OiPr)$_2$Cl | " | Cp$_2$TiCl$_2$ | 1.05 | " | " |
| 9 | I | " | Al(OiPr)$_3$ | " | (Bz)$_4$Zr | 0.98 | " | " |
| 10 | J | " | " | " | Cp$_2$HfCl$_2$ | 0.99 | " | " |
| 11 | K | " | " | " | (Ind)$_2$TiCl$_2$ | 1.0 | " | " |
| CE 1 | – | – | – | – | Cp$_2$TiCl$_2$ | – | MAO | 500 |
| 2 | L | – | Al(OiPr)$_3$ | – | " | 1.0 | " | " |
| 3 | M | SiO$_2$ | – | – | " | 1.02 | " | " |
| 4 | – | – | – | – | Cp$_2$ZrCl$_2$ | – | " | " |

IE: inventive example    CE: comparative example

EP 0 474 391 B1

Table 2

| run | type | solid catalyst component | | | | (d)/(a) (mmol/g) | (b)/(a) (mmol/g) | (3)M (wt%) | org Al compd | Al/M (mol ratio) |
| --- | --- | --- | --- | --- | --- | --- | --- | --- | --- | --- |
| | | (a) | (b) | (c) | (d) | | | | | |
| IE 12 | AA | $SiO_2$ | $Al(OEt)_3$ | $Cp_2TiCl_2$ | $MgCl_2$ | 2 | 0.45 | 1.02 | MAO | 500 |
| 13 | BB | " | " | " | " | 3 | 1.5 | 0.98 | " | " |
| 14 | CC | " | " | " | " | 1 | 0.29 | 1.03 | " | " |
| 15 | DD | " | " | $Cp_2ZrCl_2$ | " | 2 | 0.45 | 1.0 | " | " |
| 16 | EE | " | $Al(OiPr)_3$ | $Cp_2TiCl_2$ | " | 2 | 0.45 | 0.99 | " | " |
| 17 | FF | " | " | " | " | 1 | 0.29 | 1.0 | " | " |
| 18 | GG | " | " | " | " | " | " | 0.98 | " | " |
| 19 | HH | " | " | " | " | " | " | 1.0 | " | " |
| 20 | II | " | $Al(OEt)_3$ | $Cp_2TiMe_2$ | " | 2 | 0.45 | 0.98 | " | " |
| 21 | JJ | " | " | $Cp_2ZrMe_2$ | " | " | " | 0.99 | " | " |
| 22 | KK | " | " | $(Bz)_4Zr$ | " | " | " | 0.99 | " | " |
| 23 | LL | " | " | $Cp_2HfCl_2$ | " | " | " | 1.0 | " | " |
| 24 | MM | " | " | $(Ind)_2TiCl_2$ | " | " | " | 1.01 | " | " |
| 25 | NN | $Al_2O_3$ | " | $Cp_2TiCl_2$ | " | " | " | 1.05 | " | " |
| 26 | OO | $SiO_2$-$Al_2O_3$ | " | " | " | " | " | 0.97 | " | " |
| 27 | PP | $SiO_2$-$TiO_2$ | " | " | " | " | " | 0.98 | " | " |
| 28 | QQ | $SiO_2$ | $Al(OiPr)_2Cl$ | " | " | " | " | 0.99 | " | " |
| CE 5 | RR | $SiO_2$ | – | $Cp_2TiCl_2$ | – | – | – | 1.0 | MAO | 500 |
| 6 | SS | " | $Al(OiPr)_3$ | " | – | – | 0.5 | 1.0 | " | " |

## Table 3

| run | | yield (g) | catalytic activity (g/gM) | MI$^{2.16}$ (g/10 min) | DSR | bulk density (g/cm$^3$) | D (g/cm$^2$) | MP (°C, peak) |
|---|---|---|---|---|---|---|---|---|
| IE | 1 | 43 | 43,000 | 1.9 | 1.93 | 0.42 | 0.915 | 93.9 |
| | 2 | 39 | 39,000 | 1.4 | 1.92 | 0.43 | 0.919 | 94.1 |
| | 3 | 48 | 48,000 | 9.4 | 1.78 | 0.41 | 0.911 | 98.0 |
| | 4 | 44 | 44,000 | 9.0 | 1.76 | 0.41 | 0.914 | 98.3 |
| | 5 | 79 | 40,000 | 2.0 | 1.82 | 0.42 | 0.921 | 95.1 |
| | 6 | 34 | 34,000 | 1.3 | 1.89 | 0.41 | 0.923 | 95.4 |
| | 7 | 50 | 50,000 | 8.8 | 1.71 | 0.43 | 0.919 | 110.2 |
| | 8 | 36 | 36,000 | 8.7 | 1.87 | 0.41 | 0.924 | 95.5 |
| | 9 | 20 | 20,000 | 1.3 | 1.69 | 0.38 | 0.928 | 111.6 |
| | 10 | 21 | 21,000 | 0.45 | 1.81 | 0.39 | 0.916 | 94.0 |
| | 11 | 41 | 41,000 | 1.8 | 1.83 | 0.40 | 0.918 | 94.0 |
| CE | 1 | 27 | 14,000 | 3.5 | 1.54 | 0.23 | 0.922 | 88.6 |
| | 2 | 10 | 10,000 | 1.9 | 1.73 | 0.28 | 0.921 | 89.0, 124.3 |
| | 3 | 19 | 19,000 | 2.2 | 1.55 | 0.36 | 0.924 | 89.0 |
| | 4 | 75 | 24,000 | 37 | 1.58 | 0.21 | 0.911 | 97.9 |

EP 0 474 391 B1

Table 4

| run | yield (g) | catalytic activity (g/gM) | MI2.16 (g/10 min) | DSR | bulk density (g/cm³) | D (g/cm²) | MP (°C, peak) |
|---|---|---|---|---|---|---|---|
| IE 12 | 87 | 85,000 | 1.8 | 1.87 | 0.42 | 0.925 | 83.1, 121.2 |
| 13 | 75 | 76,500 | 0.6 | 1.68 | 0.39 | 0.926 | 89.4, 121.6 |
| 14 | 96 | 93,000 | 3.1 | 1.78 | 0.44 | 0.928 | 92.0, 122.7 |
| 15 | 88 | 88,000 | 11 | 1.88 | 0.40 | 0.9222 | 110.2 |
| 16 | 80 | 81,000 | 2.0 | 1.86 | 0.41 | 0.920 | 90.1, 121.0 |
| 17 | 91 | 91,000 | 2.9 | 1.89 | 0.42 | 0.919 | 89.7, 121.0 |
| 18 | 65 | 66,000 | 0.8 | 1.67 | 0.40 | 0.920 | 89.5, 120.8 |
| 19 | 53 | 53,000 | 1.1 | 1.83 | 0.38 | 0.918 | 89.4, 120.6 |
| 20 | 73 | 74,500 | 3.4 | 1.92 | 0.39 | 0.923 | 91.2 |
| 21 | 81 | 82,000 | 16 | 1.74 | 0.42 | 0.919 | 107.1 |
| 22 | 29 | 29,000 | 2.3 | 1.79 | 0.38 | 0.929 | 118 |
| 23 | 39 | 39,000 | 0.35 | 1.60 | 0.41 | 0.926 | 110.3 |
| 24 | 68 | 67,000 | 1.4 | 1.83 | 0.41 | 0.919 | 92.0, 120.6 |
| 25 | 46 | 44,000 | 1.1 | 1.74 | 0.43 | 0.918 | 85.1, 120.4 |
| 26 | 34 | 35,000 | 0.8 | 1.63 | 0.40 | 0.920 | 86.2, 120.9 |
| 27 | 59 | 60,000 | 1.7 | 1.71 | 0.38 | 0.919 | 89.7, 121.0 |
| 28 | 81 | 82,000 | 1.5 | 1.76 | 0.38 | 0.920 | 89.4, 121.0 |
| CE 5 | 16 | 16,000 | 2.2 | 1.55 | 0.36 | 0.924 | 89.0 |
| 6 | 43 | 43,000 | 1.9 | 1.93 | 0.42 | 0.915 | 93.9 |

## Claims

1. A process for producing polyolefins which comprises homopolymerizing an olefin or copolymerizing two or more olefins in the presence of a catalyst comprising a solid catalyst component and a modified organoaluminum compound, the solid catalyst component derived from mutual contact of (a) an inorganic porous oxide, (b) a compound of the formula $Al(OR^1)_nX_{3-n}$ where $R^1$ is a hydrocarbon group of 1 to 24 carbon atoms, X is a halogen atom, and n is $0 < n \leq 3$, and being present in an amount of 1 to 1000000 in an atomic ratio of transition metal to aluminium (c) a compound of the formula $R_p^2 MX_r$ where M is a Group IVa metal, $R^2$ is a cyclopentadienyl, substituted cyclopentadienyl, indenyl or substituted indenyl group or an aralkyl group of 7 to 24 carbon atoms, either two groups of $R^2$ may be

bonded via an alkylene group of 2 to 8 carbon atoms, X is a halogen or hydrogen atom or a hydrocarbon residue of 1 to 24 carbon atoms, and p and r are $2 \leq p \leq 4$, $0 \leq r \leq 2$ and $p + r = 4$, the modified organoaluminum compound resulting from reaction of an organoaluminum compound and water and having in the molecule 1 to 100 Al-O-Al bonds.

2. The process of claim 1 wherein compound (a) is silica, alumina, silica-alumina, titania, zirconia or thoria or a combination thereof.

3. The process of claim 1 wherein compound (b) is trimethoxyaluminum, dimethoxymonochloroaluminum, methoxydichloroaluminum, triethoxyaluminum, diethoxymonochloroaluminum, ethoxydichloroaluminum, triisopropoxyaluminum, diisopropoxymonochloroaluminum, isoproxydichloroaluminum, tri-n-butoxyaluminum, di-n-butoxymonochloroaluminum, n-butoxydichloroaluminum, tri-sec-butoxyaluminum, di-sec-butoxymonochloroaluminum, sec-butoxydichloroaluminum, tripentoxyaluminum, dipentoxymonoch-loroaluminum, pentoxydichloroaluminum, triphenoxyaluminum, diphenoxymonochloroaluminum, mon-ophenoxydichloroaluminum, tritolyloxyaluminum, ditolyloxymonochloroaluminum, tolyloxydich-loroaluminum or tribenzyloxyaluminum.

4. The process of claim 1 wherein compound (c) is
bis(cyclopentadienyl)dichlorotitanium,
bis(cyclopentadienyl)methylchlorotitanium,
bis(cyclopentadienyl)dimethyltitanium,
bis(cyclopentadienyl)ethoxychlorotitanium,
bis(cyclopentadienyl)propoxychlorotitanium,
bis(cyclopentadienyl)phenoxychlorotitanium,
bis(cyclopentadienyl)propylchlorotitanium,
bis(cyclopentadienyl)diphenyltitanium,
bis(cyclopentadienyl)ditolyltitanium,
bis(cyclopentadienyl)titaniumbenzyl,
bis(cyclopentadienyl)titanium monochloromonohalide,
bis(methylcyclopentadienyl)dimethyltitanium,
tetracyclopentadienyltitanium,
bis(indenyl)dichlorotitanium,
bis(indenyl)dimethyltitanium,
ethylene bis(indenyl)titanium dichloride,
ethylene bis(tetrahydroindenyl)titanium dichloride,
tetraneopentyltitanium, tetraneophenyltitanium,
tetrabenzyltitanium,
bis(cyclopentadienyl)dichlorozirconium,
bis(cyclopentadienyl)methylchloroziroconium,
bis(cyclopentadienyl)dimethylzirconium,
bis(indenyl)dimethylzirconium,
bis(indenyl)dichlorozirconium,
ethylene bis(indenyl)dichlorozirconium,
ethylene bis(tetrahydroindenyl)dichlorozirconium,
ethylene bis(indenyl)dimethylzirconium,
bis(methylcyclopentadienyl)dimethylzirconium,
bis(cyclopentadienyl)zirconium monochloromonohalide,
bis(cyclopentadienyl)zirconiumbenzyl,
tetracyclopentadienylzirconium, tetrabenzylzirconium,
bis(cyclopentadienyl)ethoxychlorozirconium,
bis(cyclopentadienyl)propoxychlorozirconium,
bis(cyclopentadienyl)phenoxychlorozirconium,
bis(cyclopentadienyl)propylchlorozirconium,
bis(cyclopentadienyl)diphenylzirconium,
bis(cyclopentadienyl)citrylzirconium,
bis(cyclopentadienyl)monomethylmonohalide zirconium,
bis(cyclopentadienyl)monoethylmonochloride zirconium,
bis(cyclopentadienyl)monophenylmonochloride zirconium,

17

tetraneopentylzirconium, tetraneophenylzirconium,
bis(cyclopentadienyl)dimethylhalfnium,
bis(cyclopentadienyl)dichlorohalfnium,
bis(cyclopentadienyl)methylchlorohalfnium,
bis(cyclopentadienyl)ethylchlorohalfnium,
bis(cyclopentadienyl)propylchlorohalfnium,
bis(cyclopentadienyl)phenylchlorohalfnium,
bis(cyclopentadienyl)diphenylhalfnium,
bis(cyclopentadienyl)ditolylhalfnium,
bis(cyclopentadienyl)monochlorohalide halfnium,
bis(cyclopentadienyl)monomethylhalide halfnium,
bis(cyclopentadienyl)dibenzylhalfnium,
ethylene bis(indenyl)dichlorohalfnium,
ethylene bis(tetrahydroindenyl)dichlorohalfnium,
tetraneopentylhalfnium or tetraneophenylhalfnium.

5.   The process of claim 1 wherein the olefin is ethylene, propylene, butene-1, hexene-1 or 4-methylpentene-1 or a combination thereof.

6.   A process for producing polyolefins according to claim 1, which comprises homopolymerizing an olefin or copolymerizing two or more olefins in the presence of a catalyst comprising a solid catalyst component and a modified organoaluminum compound, the catalyst component being used in an amount of 1 to 1000000 in an atomic ratio of transition metal to aluminium, the solid catalyst component derived from mutual contact of (a) an inorganic porous oxide, (b) a compound of the formula $Al(OR^1)_nX_{3-n}$ where $R^1$ is a hydrocarbon group of 1 to 24 carbon atoms, X is a halogen atom, and n is $0 < n \leq 3$, and (c) a compound the formula $R_p^2 MX_r$ where M is a Group IVa metal, $R^2$ is a cyclopentadienyl, substituted cyclopentadienyl, indenyl or substituted indenyl group or an aralkyl group of 7 to 24 carbon atoms, either two groups of $R^2$ may be bonded via an alkylene group of 2 to 8 carbon atoms, X is a halogen or hydrogen atom or a hydrocarbon residue of 1 to 24 carbon atoms, and p and r are $2 \leq p \leq 4$, $0 \leq r \leq 2$ and $p + r = 4$, and (d) from 0.1 to 5 mmol per gram of compound (a) of a magnesium halide, the modified organoaluminum compound resulting from reaction of an organoaluminum compound and water and having in the molecule 1 to 100 Al-O-Al bonds.

7.   The process of claim 6 wherein compound (d) is magnesium fluoride, magnesium chloride, magnesium bromide or magnesium iodide or a combination thereof.

8.   The process of claim 6 wherein compound (a) is silica, alumina, silica-alumina, titania, zirconia or thoria or a combination thereof.

9.   The process of claim 6 wherein compound (b) is trimethoxyaluminum, dimethoxymonochloroaluminum, methoxydichloroaluminum, triethoxyaluminum, diethoxymonochloroaluminum, ethoxydichloroaluminum, triisopropoxyaluminum, diisopropoxymonochloroaluminum, isoproxydichloroaluminum, tri-n-butoxyaluminum, di-n-butoxymonochloroaluminum, n-butoxydichloroaluminum, tri-sec-butoxyaluminum, di-sec-butoxymonochloroaluminum, sec-butoxydichloroaluminum, tripentoxyaluminum, dipentoxymonochloroaluminum, pentoxydichloroaluminum, triphenoxyaluminum, diphenoxymonochloroaluminum, monophenoxydichloroaluminum, tritolyloxyaluminum, ditolyloxymonochloroaluminum, tolyloxydichloroaluminum or tribenzyloxyaluminum.

10.  The process of claim 6 wherein compound (c)
is bis(cyclopentadienyl)dichlorotitanium,
bis(cyclopentadienyl)methylchlorotitanium,
bis(cyclopentadienyl)dimethyltitanium,
bis(cyclopentadienyl)ethoxychlorotitanium,
bis(cyclopentadienyl)propoxychlorotitanium,
bis(cyclopentadienyl)phenoxychlorotitanium,
bis(cyclopentadienyl)propylchlorotitanium,
bis(cyclopentadienyl)diphenyltitanium,
bis(cyclopentadienyl)ditolyltitanium,

18

bis(cyclopentadienyl)titaniumbenzyl,

bis(cyclopentadienyl)titanium monochloromonohalide,

bis(methylcyclopentadienyl)dimethyltitanium,

tetracyclopentadienyltitanium,

bis(indenyl)dichlorotitanium,

bis(indenyl)dimethyltitanium,

ethylene bis(indenyl)titanium dichloride,

ethylene bis(tetrahydroindenyl)titanium dichloride,

tetraneopentyltitanium, tetraneophenyltitanium,

tetrabenzyltitanium,

bis(cyclopentadienyl)dichlorozirconium,

bis(cyclopentadienyl)methylchloroziroconium,

bis(cyclopentadienyl)dimethylzirconium,

bis(indenyl)dimethylzirconium,

bis(indenyl)dichlorozirconium,

ethylene bis(indenyl)dichlorozirconium,

ethylene bis(tetrahydroindenyl)dichlorozirconium,

ethylene bis(indenyl)dimethylzirconium,

bis(methylcyclopentadienyl)dimethylzirconium,

bis(cyclopentadienyl)zirconium monochloromonohalide,

bis(cyclopentadienyl)zirconiumbenzyl,

tetracyclopentadienylzirconium, tetrabenzylzirconium,

bis(cyclopentadienyl)ethoxychlorozirconium,

bis(cyclopentadienyl)propoxychlorozirconium,

bis(cyclopentadienyl)phenoxychlorozirconium,

bis(cyclopentadienyl)propylchlorozirconium,

bis(cyclopentadienyl)diphenylzirconium,

bis(cyclopentadienyl)citrylzirconium,

bis(cyclopentadienyl)monomethylmonohalide zirconium,

bis(cyclopentadienyl)monoethylmonochloride zirconium,

bis(cyclopentadienyl)monophenylmonochloride zirconium,

tetraneopentylzirconium, tetraneophenylzirconium,

bis(cyclopentadienyl)dimethylhalfnium,

bis(cyclopentadienyl)dichlorohalfnium,

bis(cyclopentadienyl)methylchlorohalfnium,

bis(cyclopentadienyl)ethylchlorohalfnium,

bis(cyclopentadienyl)propylchlorohalfnium,

bis(cyclopentadienyl)phenylchlorohalfnium,

bis(cyclopentadienyl)diphenylhalfnium,

bis(cyclopentadienyl)ditolylhalfnium,

bis(cyclopentadienyl)monochlorohalide halfnium,

bis(cyclopentadienyl)monomethylhalide halfnium,

bis(cyclopentadienyl)dibenzylhalfnium,

ethylene bis(indenyl)dichlorohalfnium,

ethylene bis(tetrahydroindenyl)dichlorohalfnium,

tetraneopentylhalfnium or tetraneophenylhalfnium.

11. The process of claim 6 wherein the olefin is ethylene, propylene, butene-1, hexene-1 or 4-methylpentene-1 or a combination thereof.

**Patentansprüche**

1. Verfahren zur Herstellung von Polyolefinen, das die Homopolymerisation eines Olefins oder die Copolymerisation von zwei oder mehreren Olefinen in Gegenwart eines Katalysators umfaßt, der eine feste Katalysatorkomponente und eine modifizierte aluminiumorganische Verbindung enthält, wobei die feste Katalysatorkomponente dadurch entsteht, daß (a) ein anorganisches poröses Oxid, (b) eine Verbindung der Formel $Al(OR^1)_nX_{3-n}$, in der $R^1$ für eine Kohlenwasserstoffgruppe mit 1 bis 24 Kohlenstoffatomen und X für ein Halogenatom steht und n $0 < n \leq 3$ ist, wobei die Verbindung in einer solchen Menge enthalten ist, daß das Atomverhältnis des Übergangsmetalls zu Aluminium in der Größenordnung von 1 zu 1 000 000 liegt, und (c) eine Verbindung der Formel $R_p^2 MX_r$, in der M ein Metall der Gruppe IVa des Periodensystems der Elemente ist, $R^2$ eine Cyclopentadienyl-, substituierte Cyclopentadienyl-, Indenyl- oder substituierte Indenylgruppe oder eine Aralkylgruppe mit 7 bis 24 Kohlenstoffatomen ist, wobei zwei $R^2$-Gruppen über eine Alkylengruppe mit 2 bis 8 Kohlenstoffatomen gebunden sein können, X ein Halogen- oder Wasserstoffatom oder ein Kohlenwasserstoffrest mit 1 bis 24 Kohlenstoffatomen ist und p und r $2 \leq p \leq 4$, $0 \leq r \leq 2$ und $p + r = 4$ sind, miteinander in Kontakt gebracht werden, und die modifizierte aluminiumorganische Verbindung von der Reaktion zwischen einer aluminiumorganischen Verbindung und Wasser stammt und im Molekül 1 bis 100 Al-O-Al-Bindungen aufweist.

2. Verfahren nach Anspruch 1, bei dem es sich bei Verbindung (a) um Siliciumdioxid, Aluminiumoxid, Siliciumdioxid-Aluminiumoxid, Titaniumdioxid, Zirconiumdioxid oder Thoriumoxid oder eine Kombination davon handelt.

3. Verfahren nach Anspruch 1, bei dem Verbindung (b) Trimethoxyaluminium, Dimethoxymonochloraluminium, Methoxydichloraluminium, Triethoxyaluminium, Diethoxymonochloraluminium, Ethoxydichloraluminium, Triisopropoxyaluminium, Diisopropoxymonochloraluminium, Isopropoxydichloraluminium, Tri-n-butoxyaluminium, Di-n-butoxymonochloraluminium, n-Butoxydichloraluminium, Tri-sec-butoxyaluminium, Di-sec-butoxymonochloraluminium, sec-Butoxydichloraluminium, Tripentoxyaluminium, Dipentoxymonochloraluminium, Pentoxydichloraluminium, Triphenoxyaluminium, Diphenoxymonochloraluminium, Monophenoxydichloraluminium, Tritolyloxyaluminium, Ditolyloxymonochloraluminium, Tolyloxydichloraluminium oder Tribenzyloxyaluminium ist.

4. Verfahren nach Anspruch 1, bei dem Verbindung (c)
Bis(cyclopentadienyl)dichlortitanium,
Bis(cyclopentadienyl)methylchlortitanium,
Bis(cyclopentadienyl)dimethyltitanium,
Bis(cyclopentadienyl)ethoxychlortitanium,
Bis(cyclopentadienyl)propoxychlortitanium,
Bis(cyclopentadienyl)phenoxychlortitanium,
Bis(cyclopentadienyl)propylchlortitanium,
Bis(cyclopentadienyl)diphenyltitanium,
Bis(cyclopentadienyl)ditolyltitanium,
Bis(cyclopentadienyl)titaniumbenzyl,
Bis(cyclopentadienyl)titaniummonochlormonohalogenid,
Bis(methylcyclopentadienyl)dimethyltitanium,
Tetracyclopentadienyltitanium,
Bis(indenyl)dichlortitanium,
Bis(indenyl)dimethyltitanium,
Ethylen-bis(indenyl)titaniumdichlorid,
Ethylen-bis(tetrahydroindenyl)titaniumdichlorid,
Tetraneopentyltitanium, Tetraneophenyltitanium,
Tetrabenzyltitanium,
Bis(cyclopentadienyl)dichlorzirconium,
Bis(cyclopentadienyl)methylchlorzirconium,
Bis(cyclopentadienyl)dimethylzirconium,
Bis(indenyl)dimethylzirconium,
Bis(indenyl)dichlorzirconium,
Ethylen-bis(indenyl)dichlorzirconium,
Ethylen-bis(tetrahydroindenyl)dichlorzirconium,
Ethylen-bis(indenyl)dimethylzirconium,
Bis(methylcyclopentadienyl)dimethylzirconium,
Bis(cyclopentadienyl)zirconiummonochlormonohalogenid,
Bis(cyclopentadienyl)zirconiumbenzyl,
Tetracyclopentadienylzirconium, Tetrabenzylzirconium,
Bis(cyclopentadienyl)ethoxychlorzirconium,
Bis(cyclopentadienyl)propoxychlorzirconium,

Bis(cyclopentadienyl)phenoxychlorzirconium,
Bis(cyclopentadienyl)propylchlorzirconium,
Bis(cyclopentadienyl)diphenylzirconium,
Bis(cyclopentadienyl)citrylzirconium,
Bis(cyclopentadienyl)monomethylmonohalogenidzirconium,
Bis(cyclopentadienyl)monoethylmonochloridzirconium,
Bis(cyclopentadienyl)monophenylmonochloridzirconium,
Tetraneopentylzirconium, Tetraneophenylzirconium,
Bis(cyclopentadienyl)dimethylhafnium,
Bis(cyclopentadienyl)dichlorhafnium,
Bis(cyclopentadienyl)methylchlorhafnium,
Bis(cyclopentadienyl)ethylchlorhafnium,
Bis(cyclopentadienyl)propylchlorhafnium,
Bis(cyclopentadienyl)phenylchlorhafnium,
Bis(cyclopentadienyl)diphenylhafnium,
Bis(cyclopentadienyl)ditolylhafnium,
Bis(cyclopentadienyl)monochlorhalogenidhafnium,
Bis(cyclopentadienyl)monomethylhalogenidhafnium,
Bis(cyclopentadienyl)dibenzylhafnium,
Ethylen-bis(indenyl)dichlorhafnium,
Ethylen-bis(tetrahydroindenyl)dichlorhafnium,
Tetraneopentylhafnium oder Tetraneophenylhafnium ist.

5. Verfahren nach Anspruch 1, bei dem es sich bei dem Olefin um Ethylen, Propylen, Buten-1, Hexen-1 oder 4-Methylpenten-1 oder eine Kombination davon handelt.

6. Verfahren zur Herstellung von Polyolefinen nach Anspruch 1, das die Homopolymerisation eines Olefins oder die Copolymerisation von zwei oder mehreren Olefinen in Gegenwart eines Katalysators umfaßt, der eine feste Katalysatorkomponente und eine modifizierte aluminiumorganische Verbindung enthält, wobei die Katalysatorkomponente in einer solchen Menge verwendet wird, daß das Atomverhältnis des Übergangsmetalls zu Aluminium in der Größenordnung von 1 zu 1 000 000 liegt, wobei die feste Katalysatorkomponente dadurch entsteht, daß (a) ein anorganisches poröses Oxid, (b) eine Verbindung der Formel $Al(OR^1)_n X_{3-n}$, in der $R^1$ für eine Kohlenwasserstoffgruppe mit 1 bis 24 Kohlenstoffatomen und X für ein Halogenatom steht und n $0 < n \leq 3$ ist, und (c) eine Verbindung der Formel $R^2_p MX_r$, in der M ein Metall der Gruppe IVa des Periodensystems der Elemente ist, $R^2$ eine Cyclopentadienyl-, substituierte Cyclopentadienyl-, Indenyl- oder substituierte Indenylgruppe oder eine Aralkylgruppe mit 7 bis 24 Kohlenstoffatomen ist, wobei zwei $R^2$-Gruppen über eine Alkylengruppe mit 2 bis 8 Kohlenstoffatomen gebunden sein können, X ein Halogen- oder Wasserstoffatom oder ein Kohlenwasserstoffrest mit 1 bis 24 Kohlenstoffatomen ist und p und r $2 \leq p \leq 4$, $0 \leq r \leq 2$ und p + r = 4 sind, und (d) 0,1 bis 5 mmol eines Magnesiumhalogenids je Gramm der Verbindung (a) miteinander in Kontakt gebracht werden, und die modifizierte aluminiumorganische Verbindung von der Reaktion zwischen einer aluminiumorganischen Verbindung und Wasser stammt und im Molekül 1 bis 100 Al-O-Al-Bindungen aufweist.

7. Verfahren nach Anspruch 6, bei dem es sich bei Verbindung (d) um Magnesiumfluorid, Magnesiumchlorid, Magnesiumbromid oder Magnesiumiodid oder eine Kombination davon handelt.

8. Verfahren nach Anspruch 6, bei dem es sich bei Verbindung (a) um Siliciumdioxid, Aluminiumoxid, Siliciumdioxid-Aluminiumoxid, Titaniumdioxid, Zirconiumdioxid oder Thoriumoxid oder eine Kombination davon handelt.

9. Verfahren nach Anspruch 6, bei dem Verbindung (b) Trimethoxyaluminium, Dimethoxymonochloraluminium, Methoxydichloraluminium, Triethoxyaluminium, Diethoxymonochloraluminium, Ethoxydichloraluminium, Triisopropoxyaluminium, Diisopropoxymonochloraluminium, Isopropoxydichloraluminium, Tri-n-butoxyaluminium, Di-n-butoxymonochloraluminium, n-Butoxydichloraluminium, Tri-sec-butoxyaluminium, Di-sec-butoxymonochloraluminium, sec-Butoxydichloraluminium, Tripentoxyaluminium, Dipentoxymonochloraluminium, Pentoxydichloraluminium, Triphenoxyaluminium, Diphenoxymonochloraluminium, Monophenoxydichloraluminium, Tritolyloxyaluminium, Ditolyloxymonochloraluminium, Tolyloxydichloraluminium oder Tribenzyloxyaluminium ist.

10. Verfahren nach Anspruch 6, bei dem Verbindung (c)
Bis(cyclopentadienyl)dichlortitanium,
Bis(cyclopentadienyl)methylchlortitanium,
Bis(cyclopentadienyl)dimethyltitanium,
Bis(cyclopentadienyl)ethoxychlortitanium,
Bis(cyclopentadienyl)propoxychlortitanium,
Bis(cyclopentadienyl)phenoxychlortitanium,
Bis(cyclopentadienyl)propylchlortitanium,
Bis(cyclopentadienyl)diphenyltitanium,
Bis(cyclopentadienyl)ditolyltitanium,
Bis(cyclopentadienyl)titaniumbenzyl,
Bis(cyclopentadienyl)titaniummonochlormonohalogenid,
Bis(methylcyclopentadienyl)dimethyltitanium,
Tetracyclopentadienyltitanium,
Bis(indenyl)dichlortitanium,
Bis(indenyl)dimethyltitanium,
Ethylen-bis(indenyl)titaniumdichlorid,
Ethylen-bis(tetrahydroindenyl)titaniumdichlorid,
Tetraneopentyltitanium, Tetraneophenyltitanium,
Tetrabenzyltitanium,
Bis(cyclopentadienyl)dichlorzirconium,
Bis(cyclopentadienyl)methylchlorzirconium,
Bis(cyclopentadienyl)dimethylzirconium,
Bis(indenyl)dimethylzirconium,
Bis(indenyl)dichlorzirconium,
Ethylen-bis(indenyl)dichlorzirconium,
Ethylen-bis(tetrahydroindenyl)dichlorzirconium,
Ethylen-bis(indenyl)dimethylzirconium,
Bis(methylcyclopentadienyl)dimethylzirconium,
Bis(cyclopentadienyl)zirconiummonochlormonohalogenid,
Bis(cyclopentadienyl)zirconiumbenzyl,
Tetracyclopentadienylzirconium, Tetrabenzylzirconium,
Bis(cyclopentadienyl)ethoxychlorzirconium,
Bis(cyclopentadienyl)propoxychlorzirconium,
Bis(cyclopentadienyl)phenoxychlorzirconium,
Bis(cyclopentadienyl)propylchlorzirconium,
Bis(cyclopentadienyl)diphenylzirconium,
Bis(cyclopentadienyl)citrylzirconium,
Bis(cyclopentadienyl)monomethylmonohalogenidzirconium,
Bis(cyclopentadienyl)monoethylmonochloridzirconium,
Bis(cyclopentadienyl)monophenylmonochloridzirconium,
Tetraneopentylzirconium, Tetraneophenylzirconium,
Bis(cyclopentadienyl)dimethylhafnium,
Bis(cyclopentadienyl)dichlorhafnium,
Bis(cyclopentadienyl)methylchlorhafnium,
Bis(cyclopentadienyl)ethylchlorhafnium,
Bis(cyclopentadienyl)propylchlorhafnium,
Bis(cyclopentadienyl)phenylchlorhafnium,
Bis(cyclopentadienyl)diphenylhafnium,
Bis(cyclopentadienyl)ditolylhafnium,
Bis(cyclopentadienyl)monochlorhalogenidhafnium,
Bis(cyclopentadienyl)monomethylhalogenidhafnium,
Bis(cyclopentadienyl)dibenzylhafnium,
Ethylen-bis(indenyl)dichlorhafnium,
Ethylen-bis(tetrahydroindenyl)dichlorhafnium,
Tetraneopentylhafnium oder Tetraneophenylhafnium ist.

**11.** Verfahren nach Anspruch 6, bei dem es sich bei dem Olefin um Ethylen, Propylen, Buten-1, Hexen-1 oder 4-Methylpenten-1 oder eine Kombination davon handelt.

**Revendications**

**1.** Procédé pour la production de polyoléfines qui comprend l'homopolymérisation d'une oléfine ou la copolymérisation de deux oléfines ou davantage en présence d'un catalyseur comprenant un composant catalytique solide et un composé organoaluminique modifié, le composant catalytique solide dérivant du contact mutuel de (a) un oxyde minéral poreux, (b) un composé de formule $Al(OR^1)_n X_{3-n}$, dans laquelle $R^1$ est un groupe hydrocarboné de 1 à 24 atomes de carbone, x est un atome d'halogène et n est $0 < n \leq 3$ et étant présent dans une proportion atomique de 1 à 1 000 000 de métal de transition par rapport à l'aluminium, (c) un composé de formule $R^2_p MX_r$ dans laquelle M est un métal du groupe IVa, $R^2$ est un groupe cyclopentadiényle, cyclopentadiényle substitué, indényle ou indényle substitué ou un groupe aralkyle de 7 à 24 atomes de carbone, deux groupes $R^2$ peuvent être liés via un groupe alkylène de 2 à 8 atomes de carbone, X est un atome d'halogène ou d'hydrogène ou un reste hydrocarboné de 1 à 24 atomes de carbone et p et r sont $2 \leq p \leq 4$, $0 \leq r \leq 2$ et $p + r = 4$, le composé organoaluminique modifié résultant de la réaction d'un composé organoaluminique et d'eau et ayant, dans sa molécule, 1 à 100 liaisons Al-O-Al.

**2.** Procédé selon la revendication 1, où le composé (a) est la silice, l'alumine, la silice-alumine, le dioxyde de titane, la zircone ou la thorine, ou une de leurs combinaisons.

**3.** Procédé selon la revendication 1, où le composé (b) est le triméthoxyaluminium, le diméthoxymonochloroaluminium, le méthoxydichloroaluminium, le triéthoxyaluminium, le diéthoxymonochloroaluminium, l'éthoxydichloroaluminium, le triisopropoxyaluminium, le diisopropoxymonochloroaluminium, l'isopropoxydichloroaluminium, le tri-n-butoxyaluminium, le di-n-butoxymonochloroaluminium, le n-butoxydichloroaluminium, le tri-sec-butoxyaluminium, le di-sec-butoxymonochloroaluminium, le sec-butoxydichloroaluminium, le tripentoxyaluminium, le dipentoxymonochloroaluminium, le pentoxydichloroaluminium, le triphénoxyaluminium, le diphénoxymonochloroaluminium, le monophénoxydichloroaluminium, le tritolyloxyaluminium, le ditolyloxymonochloroaluminium, le tolyloxydichloroaluminium ou le tribenzyloxyaluminium.

**4.** Procédé selon la revendication 1, où le composé (c) est le bis(cyclopentadiényl)dichlorotitane,
le bis(cyclopentadiényl)méthylchlorotitane,
le bis(cyclopentadiényl)diméthyltitane,
le bis(cyclopentadiényl)éthoxychlorotitane,
le bis(cyclopentadiényl)propoxychlorotitane,
le bis(cyclopentadiényl)phénoxychlorotitane,
le bis(cyclopentadiényl)propylchlorotitane,
le bis(cyclopentadiényl)diphényltitane,
le bis(cyclopentadiényl)ditolyltitane,
le bis(cyclopentadiényl)titanebenzyle,
un monochloromonohalogénure de bis(cyclopentadiényl)titane,
le bis(méthylcyclopentadiényl)diméthyltitane,
le tétracyclopentadiényltitane,
le bis(indényl)dichlorotitane,
le bis(indényl)diméthyltitane,
le dichlorure d'éthylène-bis(indényl)titane,
le dichlorure d'éthylène-bis(tétrahydro-indényl)titane,
le tétranéopentyltitane,
le tétranéophényltitane,
le tétrabenzyltitane,
le bis(cyclopentadiényl)dichlorozirconium,
le bis(cyclopentadiényl)méthylchlorozirconium,
le bis(cyclopentadiényl)diméthylzirconium,
le bis(indényl)diméthylzirconium,
le bis(indényl)dichlorozirconium,
l'éthylène-bis(indényl)dichlorozirconium,

l'éthylène-bis(tétrahydro-indényl)dichlorozirconium,
l'éthylène-bis(indényl)diméthylzirconium,
le bis(méthylcyclopentadiényl)diméthylzirconium,
un monochloromonohalogénure de bis(cyclopentadiényl)zirconium,
le bis(cyclopentadiényl)zirconiumbenzyle,
le tétracyclopentadiénylzirconium,
le tétrabenzylzirconium,
le bis(cyclopentadiényl)éthoxychlorozirconium,
le bis(cyclopentadiényl)propoxychlorozirconium,
le bis(cyclopentadiényl)phénoxychlorozirconium,
le bis(cyclopentadiényl)propylchlorozirconium,
le bis(cyclopentadiényl)diphénylzirconium,
le bis(cyclopentadiényl)citrylzirconium,
un bis(cyclopentadiényl)monométhymonohalogénure de zirconium,
un bis(cyclopentadiényl)monoéthylmonochlorure de zirconium,
un bis(cyclopentadiényl)monophénylmonochlorure de zirconium,
le tétranéopentylzirconium,
le tétranéophénylzirconium,
le bis(cyclopentadiényl)diméthylhafnium,
le bis(cyclopentadiényl)dichlorohafnium,
le bis(cyclopentadiényl)méthylchlorohafnium,
le bis(cyclopentadiényl)éthylchlorohafnium,
le bis(cyclopentadiényl)propylchlorohafnium,
le bis(cyclopentadiényl)phénylchlorohafnium,
le bis(cyclopentadiényl)diphénylhafnium,
le bis(cyclopentadiényl)ditolylhafnium,
un bis(cyclopentadiényl)monochlorohalogénure d'hafnium,
un bis(cyclopentadiényl)monométhylhalogénure d'hafnium,
le bis(cyclopentadiényl)dibenzylhafnium,
l'éthylène-bis(indényl)dichlorohafnium,
l'éthylène-bis(tétrahydro-indényl)dichlorohafnium,
le tétranéopentylhafnium ou
le tétranéophénylhafnium

5. Procédé selon la revendication 1, où l'oléfine est l'éthylène, le propylène, le butène-1, l'hexène-1, le 4-méthylpentène-1 ou une de leurs combinaisons.

6. Procédé pour la production de polyoléfines selon la revendication 1, qui comprend l'homopolymérisation d'une oléfine ou la copolymérisation de deux oléfines ou davantage en présence d'un catalyseur comprenant un composant catalytique solide et un composé organoaluminique modifié, le composant catalytique étant utilisé dans une proportion atomique de 1 à 1 000 000 de métal de transition par rapport à l'aluminium, le composant catalytique solide provenant du contact mutuel de (a) un oxyde minéral poreux, (b) un composé de formule $Al(OR^1)_n X_{3-n}$, dans laquelle $R^1$ est un groupe hydrocarboné de 1 à 24 atomes de carbone, X est un atome d'halogène et n est $0 < n \leq 3$, et (c) un composé de formule $R^2_p MX_r$, dans laquelle M est un métal du groupe IVa, $R^2$ est un groupe cyclopentadiényle, cyclopentadiényle substitué, indényle ou indényle substitué ou un groupe aralkyle de 7 à 24 atomes de carbone, deux groupes $R^2$ peuvent être liés via un groupe alkylène de 2 à 8 atomes de carbone, X est un atome d'halogène ou d'hydrogène ou un reste hydrocarboné de 1 à 24 atomes de carbone et p et r sont $2 \leq p \leq 4$, $0 \leq r \leq 2$ et $p + r = 4$, et (d) de 0,1 à 5 mmol par gramme du composé (a) d'un halogénure de magnésium, le composé organoaluminique modifié résultant de la réaction d'un composé organoaluminique et d'eau et ayant dans sa molécule 1 à 100 liaisons Al-O-Al.

7. Procédé selon la revendication 6, où le composé (d) est le fluorure de magnésium, le chlorure de magnésium, le bromure de magnésium ou l'iodure de magnésium, ou une de leurs combinaisons.

8. Procédé selon la revendication 6, où le composé (a) est la silice, l'alumine, la silice-alumine, le dioxyde de titane, la zircone ou la thorine, ou une de leurs combinaisons.

**9.** Procédé selon la revendication 6, où le composé (b) est le triméthoxyaluminium, le diméthoxymonochloroaluminium, le méthoxydichloroaluminium, le triéthoxyaluminium, le diéthoxymonochloroaluminium, l'éthoxydichloroaluminium, le triisopropoxyaluminium, le diisopropoxymonochloroaluminium, l'isopropoxydichloroaluminium, le tri-n-butoxyaluminium, le di-n-butoxymonochloroaluminium, le n-butoxydichloroaluminium, le tri-sec-butoxyaluminium, le di-sec-butoxymonochloroaluminium, le sec-butoxydichloroaluminium, le tripentoxyaluminium, le dipentoxymonochloroaluminium, le pentoxydichloroaluminium, le triphénoxyaluminium, le diphénoxymonochloroaluminium, le monophénoxydichloroaluminium, le tritolyloxyaluminium, le ditolyloxymonochloroaluminium, le tolyloxydichloroaluminium ou le tribenzyloxyaluminium.

**10.** Procédé selon la revendication 6, où le composé (c) est
bis (cyclopentadiényl)dichlorotitane,
le bis(cyclopentadiényl)méthylchlorotitane,
le bis(cyclopentadiényl)diméthyltitane,
le bis(cyclopentadiényl)éthoxychlorotitane.
le bis(cyclopentadiényl)propoxychlorotitane,
le bis(cyclopentadiényl)phénoxychlorotitane,
le bis(cyclopentadiényl)propylchlorotitane,
le bis(cyclopentadiényl)diphényltitane,
le bis(cyclopentadiényl)ditolyltitane,
le bis(cyclopentadiényl)titanebenzyle,
un monochloromonohalogénure de bis(cyclopentadiényl)titane,
le bis(méthylcyclopentadiényl)diméthyltitane,
le tétracyclopentadiényltitane,
le bis(indényl)dichlorotitane,
le bis(indényl)diméthyltitane,
le dichlorure d'éthylène-bis(indényl)titane,
le dichlorure d'éthylène-bis(tétrahydro-indényl)titane,
le tétranéopentyltitane,
le tétranéophényltitane,
le tétrabenzyltitane,
le bis(cyclopentadiényl)dichlorozirconium,
le bis(cyclopentadiényl)méthylchlorozirconium,
le bis(cyclopentadiényl)diméthylzirconium,
le bis(indényl)diméthylzirconium,
le bis(indényl)dichlorozirconium,
l'éthylène-bis(indényl)dichlorozirconium,
l'éthylène-bis(tétrahydro-indényl)dichlorozirconium,
l'éthylène-bis(indényl)diméthylzirconium,
le bis(méthylcyclopentadiényl)diméthylzirconium.
un monochloromonohalogénure de bis(cyclopentadiényl)zirconium,
le bis(cyclopentadiényl)zirconiumbenzyle,
le tétracyclopentadiénylzirconium,
le tétrabenzylzirconium,
le bis(cyclopentadiényl)éthoxychlorozirconium,
le bis(cyclopentadiényl)propoxychlorozirconium,
le bis(cyclopentadiényl)phénoxychlorozirconium,
le bis(cyclopentadiényl)propylchlorozirconium,
le bis(cyclopentadiényl)diphénylzirconium,
le bis(cyclopentadiényl)citrylzirconium,
un bis(cyclopentadiényl)monométhymonohalogénure de zirconium,
un bis(cyclopentadiényl)monoéthylmonochlorure de zirconium,
un bis(cyclopentadiényl)monophénylmonochlorure de zirconium,
le tétranéopentylzirconium,
le tétranéophénylzirconium,
le bis(cyclopentadiényl)diméthylhafnium,
le bis(cyclopentadiényl)dichlorohafnium,
le bis(cyclopentadiényl)méthylchlorohafnium,

le bis(cyclopentadiényl)éthylchlorohafnium,
le bis(cyclopentadiényl)propylchlorohafnium,
le bis(cyclopentadiényl)phénylchlorohafnium,
le bis(cyclopentadiényl)diphénylhafnium,
le bis(cyclopentadiényl)ditolylhafnium,
un bis(cyclopentadiényl)monochlorohalogénure d'hafnium,
un bis(cyclopentadiényl)monométhylhalogénure d'hafnium,
le bis(cyclopentadiényl)dibenzylhafnium,
l'éthylène-bis(indényl)dichlorohafnium,
l'éthylène-bis(tétrahydro-indényl)dichlorohafnium,
le tétranéopentylhafnium ou
le tétranéophénylhafnium

11. Procédé selon la revendication 6, où l'oléfine est l'éthylène, le propylène, lé butène-1, l'hexène-1, le 4-méthylpentène-1, ou une de leurs combinaisons.